# EUROPEAN PATENT SPECIFICATION

(11) **EP 2 988 901 B1**
(45) Date of publication and mention of the grant of the patent: **03.05.2017**
(21) Application number: 14708724.1
(22) Date of filing: 17.02.2014
(51) Int. Cl.: B23K 9/29

(54) **HYBRID THREAD FOR WELDING GUN NECK**
SCHWEISSBRENNERHALS MIT HYBRIDEM GEWINDE
FILETAGE HYBRIDE POUR COL DE CIGNE DE TORCHE DE SOUDAGE

(30) Priority: 23.04.2013 US 201313868146
(43) Date of publication of application: 02.03.2016
(73) Proprietor: Illinois Tool Works Inc., Glenview, IL 60025 (US)
(72) Inventor: CENTNER, Robert J., Glenview, Illinois 60025 (US); SNAPP, Duane S, Glenview, Illinois 60025 (US); WARNING, Robert L., Glenview, Illinois 60025 (US)
(74) Representative: Trinks, Ole
(86) International application number: PCT/US2014/016684
(87) International publication number: WO 2014/175944

(56) References cited:
- US-A- 3 249 734
- US-A- 3 728 514

## Description

### TECHNICAL FIELD

This disclosure relates to welding guns, and more particularly to a neck for a welding gun.

### BACKGROUND OF THE INVENTION

Arc welding guns generally consist of two main sections: (i) a flexible cable section which delivers power, shielding gas, electrode wire, and sometimes cooling water to (ii) a rigid neck section which delivers the power, shielding gas, electrode wire, and sometimes cooling water to the contact tip and nozzle. The contact tip and nozzle are secured at a front end of the rigid neck section.

Typically, the neck of the welding gun has a threaded end for accepting welding consumables such as the welding gas diffuser. The gas diffuser is screwed onto the threads at the end of the welding gun neck, and allows for passage of shielding gas that is fed through the neck. The gas diffuser also provides for mounting of the contact tip at the front end of the welding gun.

Gas diffusers are available from a variety of manufacturers throughout the world. It is common for each manufacturer to have their own unique design(s) for the gas diffuser, and for each manufacturer to make welding gun necks that mate only with their own gas diffusers (see US-A-3728514 and US-A-3249734). No industry standard exists for the connection of the welding gun neck to the gas diffuser.

### SUMMARY OF THE INVENTION

Disclosed is a welding gun neck that provides cross-brand compatibility with a plurality of welding gun consumables from different manufacturers. The welding gun neck includes a custom threaded connector that allows more than one type of gas diffuser to be threaded on the neck, adding versatility to a welding gun incorporating the neck.

More particularly, a welding gun neck for a welding gun includes an elongated tubular body having an end connectable to a gas diffuser. The elongated tubular body includes a threaded external surface adjacent the end. The threaded external surface defines a male, threaded portion. The male, threaded portion is mateable with a female thread of the gas diffuser. The threaded external surface includes a straight portion and an adjoining tapered portion. The welding gun neck is connectable to both a gas diffuser having a straight female thread and a gas diffuser having a tapered female thread.

In one embodiment, the tapered portion is disposed closer to the end of the elongated tubular body than the straight portion. The tapered portion of the threaded external surface has NPT threads, and the straight portion of the threaded external surface has screw threads. The thread of the tapered portion is continuous with the thread of the straight portion. That is, the threaded external surface consists of both NPT and screw types of threads adjacently disposed to one another proximate the end of the tubular body for connecting a gas diffuser.

Optionally, the elongated tubular body may include a tapered nose portion having a smooth external surface. The tapered nose portion may be disposed between the end of the tubular body and the tapered portion of the threaded external surface.

These and other features and advantages of the device will be more fully understood from the following detailed description of the invention taken together with the accompanying drawings.

### BRIEF DESCRIPTION OF THE DRAWINGS

In the drawings:
FIG. 1 is a side view of a welding gun including a welding gun neck;
FIG. 2 is a side view of the welding gun neck including a threaded connector;
FIG. 3 is an exploded view of the welding gun neck and a gas diffuser; and
FIG. 4 is an exploded view of the welding gun neck and another gas diffuser.

### DETAILED DESCRIPTION OF THE INVENTION

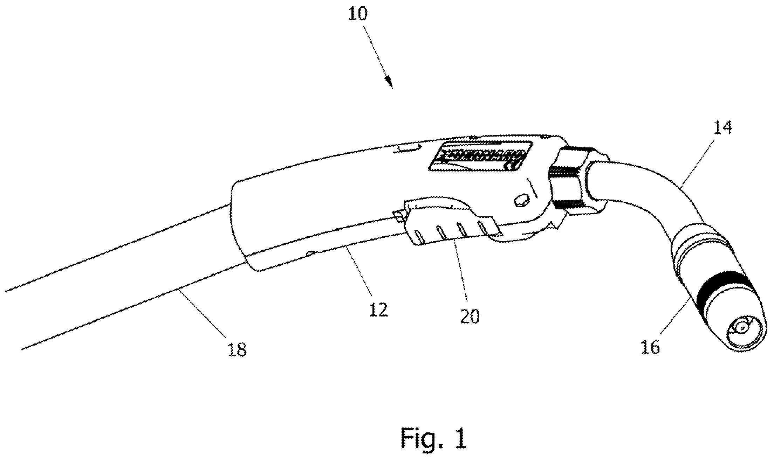

Referring to Fig 1 of the drawings in detail, numeral 10 generally indicates a welding gun for arc welding such as a MIG welding gun or similar. In MIG welding, a metal wire is used as the electrode to produce the arc. The weld area is shielded by an inert gas and the metal wire acts as a filler to add mass to the weld. The inert gas is used to shield the molten metal from outside contaminants and gases that may react with the molten material of the weld.

The welding gun 10 includes a handle 12, a gooseneck 14 extending from a front end of the handle, and a contact tip assembly 16 connected to a front end of the gooseneck opposite the handle. A power cable 18 is connected to a rearward end of the handle 12 to supply one or more of gas, electrical current, and a consumable electrode (e.g., metal welding wire) to the welding gun 10. An opposite end of the power cable 18 is connected to a wire feeder (not shown). The gooseneck 14 connected to the forward end of the handle 12 allows for the communication of the consumable electrode, the shielding gas, and the welding current to the contact tip assembly 16 mounted on the gooseneck. The contact tip assembly 16 includes a gas diffuser allowing for passage of shielding gas fed from the gooseneck, a contact tip mounted in the gas diffuser for transmitting electrical energy to the welding wire while directing the welding wire to the weld area, and a nozzle covering the gas diffuser and contact tip and directing the shielding gas evenly into the welding zone. The welding gun 10 may be a handheld gun including a control switch such as a trigger 20 for use by a human operator, or alternatively the welding gun may be mounted to a robotic arm for automatic operation. The trigger 20, when pressed by the operator, initiates the wire feed, electric power, and shielding gas flow, causing an electric arc to be formed.

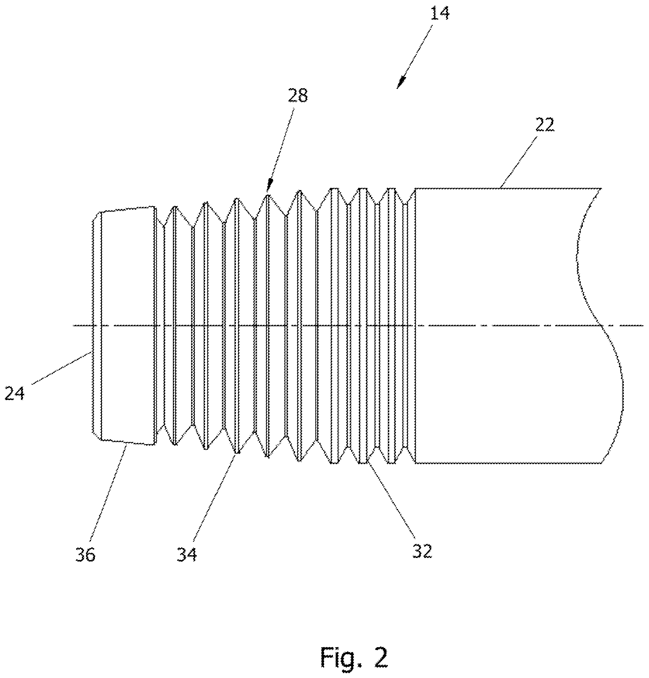

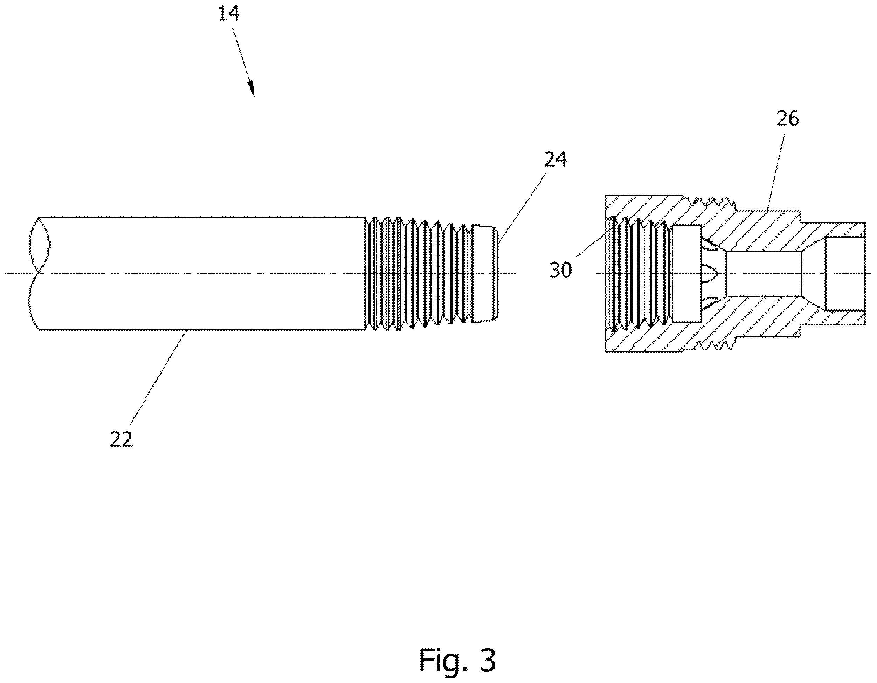

Turning to FIGS. 2 and 3, the neck 14 of the welding gun 10 includes an elongated, rigid tubular body 22 having an end 24 that is connectable to the gas diffuser 26. The tubular body 22 typically has an angular bend, but alternatively may be straight. The tubular body 22 includes a threaded external surface 28 adjacent the end 24. While the threaded external surface 28 is shown slightly spaced from the end 24 due to the presence of a nose portion (see below), the threaded external surface alternatively may be disposed directly at the end of the tubular body. The threaded external surface 28 defines a male, threaded portion. The male, threaded portion is mateable with an internal female thread 30 of the gas diffuser 26 for connecting the gas diffuser to the welding gun neck.

The threaded external surface 28 includes both a straight portion 32 and an adjoining tapered portion 34. The tapered portion 34 is disposed closer to the end 24 of the tubular body 22 than the straight portion 32, and the thread of the tapered portion is continuous with the thread of the straight portion. In one embodiment, the straight portion 32 has a 9/16"-18 screw thread, and the tapered portion 34 has a 1/4"-18 NPT (National Pipe Thread) thread. However, the tapered portion and straight portion may have other dimensions, as long as the tapered portion blends into the straight portion.

The tubular body 22 also includes a tapered nose portion 36 having a smooth external surface. The tapered nose portion 36 is disposed at the front of the tubular body 22 between the tubular body end 24 and the tapered portion 34 of the threaded external surface 28.

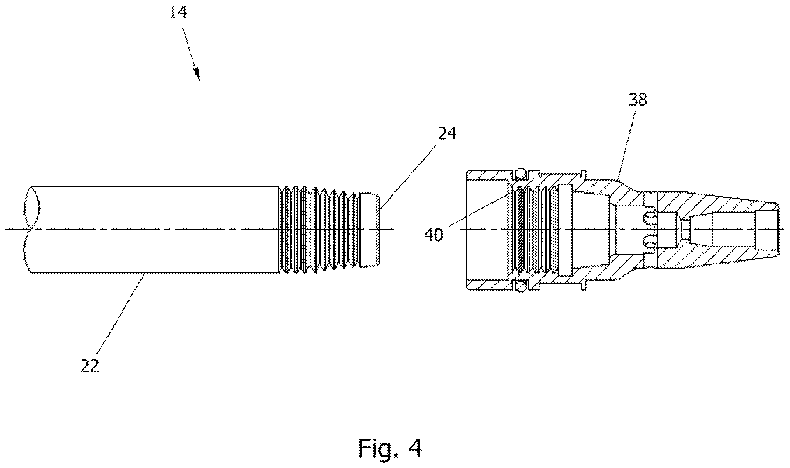

The threaded external surface 28 including the tapered portion 34 and the adjoining straight portion 32 allows the welding gun neck 14 to be connected to either a gas diffuser having a straight female thread or a gas diffuser having a tapered female thread. Thus, the neck 14 (and the welding gun 10 including the neck) is cross-compatible with more than one brand or style of consumable gas diffuser. As shown by example in FIG. 3, the neck 14 is compatible with a gas diffuser 26 having a tapered female thread 30, and as shown in FIG. 4, the neck 14 is also compatible with a different gas diffuser 38 having a straight female thread 40.

Although the device has been described by reference to a specific embodiment, it should be understood that numerous changes may be made within the scope of the following claims.

## Claims

1. A welding gun neck (14) for a welding gun (10), the welding gun neck (14) comprising:
an elongated tubular body (22) having an end (24) connectable to a gas diffuser (26);
the elongated tubular body (22) including a threaded external surface (28) adjacent the end (24), the threaded external surface (28) defining a male, threaded portion;
the male, threaded portion being mateable with a female thread of the gas diffuser (26);
**characterized in that**
the threaded external surface (28)includes a straight portion (32) and an adjoining tapered portion (34);
wherein said welding gun neck (14) is connectable to both a gas diffuser (26) having a straight female thread and a gas diffuser (26) having a tapered female thread.

2. The welding gun neck of claim 1, wherein the tapered portion (34) is disposed closer to the end (24) of the elongated tubular body (22) than the straight portion (32).

3. The welding gun neck of claim 1 or 2, wherein the tapered portion (34) of the threaded external surface (28) has NPT threads.

4. The welding gun neck of one of the preceding claims, wherein the tapered portion (34) of the threaded external surface (28) has a 1/4"-18 NPT thread.

5. The welding gun neck of one of the preceding claims, wherein the straight portion (32) of the threaded external surface (28) has screw threads.

6. The welding gun neck of one of the preceding claims, wherein the straight portion (32) of the threaded external surface (28) has a 9/16"-18 screw thread.

7. The welding gun neck of one of the preceding claims,
wherein the thread of the tapered portion (34) is continuous with the thread of the straight portion (32) .

8. The welding gun neck of one of the preceding claims, wherein the elongated tubular body (22) includes a tapered nose portion (36) having a smooth external surface, the tapered nose (36) portion being disposed between the end (24) of the tubular body (22) and the tapered portion (34) of the threaded external surface.

9. A welding gun including the welding gun neck of one of the preceding claims.

## Patentansprüche

1. Schweißbrennerhals (14) für einen Schweißbrenner (10), wobei der Schweißbrennerhals (14) umfasst:
einen länglichen röhrenförmigen Körper (22), der ein Ende (24) aufweist, das mit einem Gasleitring (26) verbindbar ist;
wobei der längliche röhrenförmige Körper (22) in der Nähe des Endes (24) eine Außenseite mit Gewinde (28) umfasst, wobei die Außenseite mit Gewinde (28) einen Außengewindeabschnitt definiert;
wobei der Außengewindeabschnitt mit einem Innengewinde des Gasleitrings (26) zusammenpassend ist;
**dadurch gekennzeichnet, dass**
die Außenseite mit Gewinde (28) einen geraden Abschnitt (32) und einen daran anschließenden sich verjüngenden Abschnitt (34) umfasst;
wobei der Schweißbrennerhals (14) sowohl an einen Gasleitring (26) mit einem geraden Innengewinde als auch an einen Gasleitring (26) mit einem sich verjüngenden Innengewinde anschließbar ist.

2. Schweißbrennerhals nach Anspruch 1, wobei der sich verjüngende Abschnitt (34) näher an dem Ende (24) des länglichen röhrenförmigen Körpers (22) angebracht ist als der gerade Abschnitt (32).

3. Schweißbrennerhals nach Anspruch 1 oder 2, wobei der sich verjüngende Abschnitt (34) der Außenseite mit Gewinde (28) NPT-Gewinde aufweist.

4. Schweißbrennerhals nach einem der vorhergehenden Ansprüche, wobei der sich verjüngende Abschnitt (34) der Außenseite mit Gewinde (28) ein 1/4"-18-NPT-Gewinde aufweist.

5. Schweißbrennerhals nach einem der vorhergehenden Ansprüche, wobei der gerade Abschnitt (32) der Außenseite mit Gewinde (28) Schraubgewinde aufweist.

6. Schweißbrennerhals nach einem der vorhergehenden Ansprüche, wobei der gerade Abschnitt (32) der Außenseite mit Gewinde (28) ein 9/16"-18-Schraubgewinde aufweist.

7. Schweißbrennerhals nach einem der vorhergehenden Ansprüche, wobei das Gewinde des sich verjüngenden Abschnitts (34) durchgehend mit dem Gewinde des geraden Abschnitts (32) ist.

8. Schweißbrennerhals nach einem der vorhergehenden Ansprüche, wobei der längliche röhrenförmige Körper (22) einen sich verjüngenden Nasenabschnitt (36) umfasst, der eine glatte Außenseite aufweist, wobei der sich verjüngende Nasenabschnitt (36) zwischen dem Ende (24) des länglichen röhrenförmigen Körpers (22) und dem sich verjüngenden Abschnitt (34) der Außenseite mit Gewinde angeordnet ist.

9. Schweißbrenner, der den Schweißbrennerhals nach einem der vorhergehenden Ansprüche umfasst.

## Revendications

1. Col de cygne de torche de soudage (14) pour une torche de soudage (10), le col de cygne de torche de soudage (14) comprenant:
un corps tubulaire allongé (22) présentant une extrémité (24) pouvant être connectée à un diffuseur de gaz (26);
le corps tubulaire allongé (22) présentant une surface externe filetée (28) adjacente à l'extrémité (24), la surface externe filetée (28) définissant une partie filetée mâle;
la partie filetée mâle pouvant être accouplée à un filetage femelle du diffuseur de gaz (26);
**caractérisé en ce que**:
la surface externe filetée (28) comprend une partie droite (32) et une partie conique contiguë (34);
dans lequel ledit col de cygne de torche de soudage (14) peut être connecté à la fois à un diffuseur de gaz (26) présentant un filetage femelle droit et à un diffuseur de gaz (26) présentant un filetage femelle conique.

2. Col de cygne de torche de soudage selon la revendication 1, dans lequel la partie conique (34) est disposée plus près de l'extrémité (24) du corps tubulaire allongé (22) que la partie droite (32).

3. Col de cygne de torche de soudage selon la revendication 1 ou 2, dans lequel la partie conique (34) de la surface externe filetée (28) présente des filetages NPT.

4. Col de cygne de torche de soudage selon l'une quelconque des revendications précédentes, dans lequel la partie conique (34) de la surface externe filetée (28) présente un filetage NPT de 1/4"-18.

5. Col de cygne de torche de soudage selon l'une quelconque des revendications précédentes, dans lequel la partie droite (32) de la surface externe filetée (28) présente des filetages de vis.

6. Col de cygne de torche de soudage selon l'une quelconque des revendications précédentes, dans lequel la partie droite (32) de la surface externe filetée (28) présente un filetage de vis de 9/16"-18.

7. Col de cygne de torche de soudage selon l'une quelconque des revendications précédentes, dans lequel le filetage de la partie conique (34) est continu avec le filetage de la partie droite (32).

8. Col de cygne de torche de soudage selon l'une quelconque des revendications précédentes, dans lequel le corps tubulaire allongé (22) comprend une partie de nez conique (36) présentant une surface externe lisse, la partie de nez conique (36) étant disposée entre l'extrémité (24) du corps tubulaire (22) et la partie conique (34) de la surface externe filetée.

9. Torche de soudage comprenant le col de cygne de torche de soudage selon l'une quelconque des revendications précédentes.
